# EUROPÄISCHE PATENTSCHRIFT

(11) **EP 2 005 025 B1**
(45) Veröffentlichungstag und Bekanntmachung des Hinweises auf die Patenterteilung: **12.10.2011**
(21) Anmeldenummer: 07723528.1
(22) Anmeldetag: 23.03.2007
(51) Int. Cl.: F16G 13/16, H02G 11/00

(54) **ENERGIEFÜHRUNGSKETTE AUS METALL**
ENERGY DRAG CHAIN MADE FROM METAL
CHAÎNE D'ALIMENTATION EN MÉTAL

(30) Priorität: 11.04.2006 DE 102006017316
(43) Veröffentlichungstag der Anmeldung: 24.12.2008
(73) Patentinhaber: Kabelschlepp GmbH, 57482 Wenden-Gerlingen (DE)
(72) Erfinder: SCHÖBEL, Gerd, 51469 Bergisch Gladbach (DE); Wulfleff, Christine, 57072 Siegen (DE)
(74) Vertreter: Neumann, Ditmar
(86) Internationale Anmeldenummer: PCT/EP2007/002577
(87) Internationale Veröffentlichungsnummer: WO 2007/118574

(56) Entgegenhaltungen:
- DD-A- 129 823
- DE-A1- 3 121 912
- DE-A1- 3 139 735

## Beschreibung

Der Gegenstand der Erfindung bezieht sich auf eine Lasche aus Metall eines Kettengliedes einer Energieführungskette, ein Kettenglied einer Energieführungskette sowie auf eine Energieführungskette.

Zum Führen von Leitungen, Schläuchen, Rohren oder dergleichen zwischen einem ortsfesten Anschlusspunkt und einem beweglichen Anschlusspunkt werden so genannte Energieführungsketten verwendet. Mit den Leitungen werden Energie, Verbrauchsmittel oder dergleichen zu der Verbrauchsstelle geleitet, bzw. zugeführt. Bei einem beweglichen Verbraucher kann es sich beispielsweise um einen Schlitten einer Werkzeugmaschine handeln. Es ist bekannt, dass Energieführungsketten aus Kunststoff hergestellt werden können. Solche Kunststoff-Energieführungsketten sind hinsichtlich des Einsatzgebietes eingeschränkt.

Diese Einschränkung kann durch die zu führenden Leitungen, Schläuche oder dergleichen gegeben sein. In besonderen Anwendungsfällen ist das Gewicht der Leitungen so hoch, dass dieses die Tragfähigkeit einer Kunststoff-Energiefiihrungskette übersteigt. Darüber hinaus kann der Einsatz von Energieführungsketten aus Kunststoff durch die Umgebungseinflüsse beschränkt sein.

Es ist bekannt, dass Energieführungsketten aus Metall verwendet werden. Die Energieführungsketten bestehen aus gelenkig miteinander verbundenen Kettengliedern. Die Kettenglieder sind gebildet durch zwei voneinander beabstandete Kettenlaschen, welche durch wenigstens einen Quersteg miteinander verbunden sind. Die Laschen bestehen aus einem Metall. Durch die DD 129 823 ist beispielsweise eine Energieführungskette aus Metall bekannt. Die Laschen weisen an dem einen Endbereich bogenförmige Durchbrüche sowie einen Durchbruch zur Aufnahme eines Gelenkbolzens auf. Der andere Endbereich weist Bohrungen auf, durch die entsprechende Bolzen hindurchgeführt werden können. Die Bolzen werden mittels entsprechender Sicherungsmittel gesichert. Der Herstellungsaufwand einer solchen Energieführungskette ist nicht unerheblich, da eine Mehrzahl von Bauteilen gehandhabt werden muss.

Durch die DE 31 21 912 A1 ist eine Energieführungskette bekannt, welche verschwenkbar miteinander verbundene Kettenglieder aufweist. Die Kettenglieder umfassen Kettenlaschen in denen koaxial zu den Gelenkachsen periphere, kreisbogenförmige Durchbrüche vorgesehen sind, durch die Elemente hindurchgreifen, die durch Anschlag an den Enden der Durchbrüche die Schwenkbewegung der Laschen relativ zueinander begrenzen. Diese Elemente sind durch Punktschweißen fest mit einer äußeren Begrenzungsscheibe verbunden. Die Elemente werden nach dem Durchstrecken durch die Durchbrüche der Kettenlaschen mit einer anderen äußeren Begrenzungsscheibe verbunden.

Eine Lasche gemäß dem Oberbegriff des Anspruchs 1 ist im DE 31 39 735 A1 offenbart.

Hiervon ausgehend liegt der vorliegenden Erfindung die Aufgabe zugrunde, eine Lasche aus Metall eines Kettengliedes einer Energieführungskette anzugeben, welche einfacher herstellbar ist.

Diese Aufgabe wird erfindungsgemäß durch eine Lasche mit den Merkmalen des Anspruchs 1 gelöst. Vorteilhafte Weiterbildungen und Ausgestaltungen der Lasche sind Gegenstand der abhängigen Ansprüche.

Die erfindungsgemäße Lasche aus einem Metall eines Kettengliedes einer Energieführungskette zeichnet sich dadurch aus, dass sie einen ersten Endbereich und einen zweiten Endbereich aufweist. Der erste Endbereich hat wenigstens zwei Durchbrüche. Der zweite Endbereich weist eine der Anzahl der Durchbrüche entsprechende Anzahl von Elementen auf. Bei der Ausbildung einer Energieführungskette ragen die Elemente wenigstens teilweise in den jeweiligen Durchbruch einer Lasche eines benachbarten Kettengliedes hinein. Die Elemente sind durch ein Umformverfahren der Ebene der Lasche vorstehend ausgebildet.

Durch diese erfindungsgemäße Ausbildung einer Lasche wird der Herstellungsaufwand derselben verringert, da die Elemente sowohl einen Anschlag als auch einen Bolzen bilden können, ohne dass zusätzliche Bolzen, wie dies aus dem Stand der Technik bekannt ist, verwendet werden müssen.

Bevorzugt wird eine Ausgestaltung einer Lasche, bei der die Elemente durch ein Zugdruckumformverfahren ausgebildet werden. Besonders bevorzugt ist dabei die Ausbildung der Elemente durch Kragenziehen. Das Kragenziehen der Elemente kann mit oder ohne Vorlochen erfolgen. Durch ein Vorlochen wird eine verbesserte Qualität der Elemente erreicht. Erfolgt das Kragenziehen ohne Vorlochen, sollte dies dann erfolgen, wenn der Innendurchmesser des Elementes kleiner oder gleich 10 mm ist.

Erfolgt das Kragenziehen mit Vorlochen, so ist es vorteilhaft, wenn ein Gegenhalter während des Kragenziehvorgangs zum Einsatz gelangt, da hierdurch zusätzliche Druckspannung in die Umformzone eingebracht wird und größere Aufweitverhältnisse ermöglicht werden.

Bevorzugt ist eine Ausgestaltung, bei der wenigstens ein Durchbruch kreisbogenförmig ausgebildet ist. Die Länge des Kreisbogens bestimmt den Verschwenkwinkel benachbarter Laschen, wenn Kettenglieder aus den erfindungsgemäßen Laschen aufgebaut und diese miteinander verbunden werden.

Nach einer noch weiteren vorteilhaften Ausgestaltung der Erfindung wird vorgeschlagen, dass ein Durchbruch im Wesentlichen kreisförmig ist, wobei der wenigstens eine kreisbogenförmige Durchbruch im Wesentlichen koaxial zum kreisförmigen Durchbruch angeordnet ist. Der kreisförmige Durchbruch bildet gemeinsam mit einem Element, welches in diesen kreisförmigen Durchbruch hineinragt eine Gelenkverbindung zweier benachbarter Laschen.

Nach einer noch weiteren vorteilhaften Ausgestaltung der Lasche wird vorgeschlagen, dass die Lasche gekröpft ausgebildet ist. Durch eine solche Ausgestaltung der Lasche wird die Möglichkeit geschaffen eine Energieführungskette aus Laschen aufzubauen, die gleich ausgebildet sind, wobei diese Laschen jeweils durch eine entsprechende Umkehrung für die Montage miteinander verbunden werden können. Zur axialen Sicherheit zweier benachbarter Laschen, die miteinander verbunden sind, wird ist erfindungsgemäß vorgesehen, dass die Laschen benachbart zu den Elementen wenigstens einen aus der Ebene der Lasche vorstehenden Vorsprung aufweisen, der einen im wesentlichen parallel zu Lasche ausgebildeten Abschnitt hat. Im montierten Zustand greift die benachbarte Lasche zwischen die Lasche und den Abschnitt, so dass eine axiale Sicherung benachbarter Laschen erreicht wird. Der Freiraum zwischen dem Abschnitt und der Lasche ist dabei so bemessen, dass eine Verbindung benachbarter Laschen ermöglicht wird, wobei die Elemente in die Durchbrüche eingebracht werden.

Die Ausbildung der Vorsprünge erfolgt vorzugsweise durch ein Umformverfahren.

Der vorliegenden Erfindung liegt des Weiteren die Aufgabe zugrunde ein Verfahren zur Herstellung einer Lasche aus Metall eines Kettengliedes einer Energieführungskette anzugeben, welches mit einem geringen Aufwand durchführbar ist.

Diese Aufgabe wird erfindungemäß durch ein Verfahren zur Herstellung einer Lasche aus Metall eines Kettengliedes einer Energieführungskette mit den Merkmalen des Anspruchs 9 gelöst. Vorteilhafte Weiterbildungen und Ausgestaltungen des Verfahrens sind Gegenstand der abhängigen Ansprüche.

Das erfindungsgemäße Verfahren zur Herstellung einer Lasche aus Metall einer Energieführungskette umfasst die folgenden Schritte:
a) Bereitstellen eines Zuschnittes einer Lasche,
b) Ausbilden wenigstens zweier Durchbrüche in einem Endbereich,
c) Ausbilden einer der Anzahl der Durchbrüche entsprechenden Anzahl von Elementen durch ein Umformverfahren, so dass die Elemente aus der Ebene der Lasche vorstehen.

Die Durchbrüche können durch einen Schneid- oder Stanzvorgang ausgebildet werden. Es besteht die Möglichkeit, dass die Durchbrüche mittels eines Laserschneidvorgangs ausgebildet werden. Die Zuschnitte können aus einer Metallplatte ausgeschnitten werden.

Die Elemente werden durch ein Zugdruckumformverfahren ausgebildet. Insbesondere erfolgt dies durch Kragenziehen mit oder ohne Vorlochen. Das Vorlochen kann durch Schneiden, insbesondere Laserschneiden oder Stanzen erfolgen. Der Durchmesser des Vorlochs ist abhängig von dem Aufweitverhältnis, das heißt von dem Verhältnis des Innendurchmessers des Elementes und dem Vorlochdurchmesser. Das Aufweiten bzw. das Kragenziehen kann mit Hilfe eines Gegenhalters erfolgen. Bei dem Einsatz eines Gegenhalters können größere Aufweitverhältnisse erreicht werden. Ob ein Vorlochen zweckdinglich ist, oder nicht, ist abhängig von dem Verhältnis des Vorlochdurchmessers zu der Dicke des Zuschnittes der Lasche.

Bevorzugt ist ein Verfahren, bei dem wenigstens ein Durchbruch kreisbogenförmig ausgebildet, insbesondere ausgestanzt wird. Es können mehrere kreisbogenförmige Durchbrüche vorgesehen sein, die auf einem gemeinsam gedachten Kreisumfang liegen. Die Länge der Durchbrüche ist vorzugsweise bei allen gleich. Durch die Länge der Durchbrüche wird der Verschwenkwinkel benachbarter Laschen einer Energieführungskette bestimmt.

Es ist nicht zwingend, doch vorteilhaft, wenn ein Durchbruch im Wesentlichen kreisförmig ausgebildet, insbesondere ausgestanzt wird. Dieser Durchbruch ist. vorzugsweise im Zentrum der kreisbogenförmigen Durchbrüche angeordnet, so dass dieser kreisförmige Durchbruch mit einem entsprechenden Element eine Gelenkverbindung bilden kann.

Erfindungsgemäß ist vorgesehen, dass benachbart zu den Elementen wenigstens ein aus der Ebene der Lasche vorstehender Vorsprung mit einem im Wesentlichen parallel zur Lasche verlaufenden Abschnitt ausgebildet wird. Gegebenenfalls kann die Ausbildung des Vorsprungs durch Vorstanzen erfolgen. Der Vorsprung wird vorzugsweise durch ein Umformverfahren, insbesondere durch Tiefziehen ausgebildet. Gemäß einem noch weiteren vorteilhaften Gedanken wird vorgeschlagen, dass die Lasche durch ein Umformverfahren gekröpft ausgebildet wird. Bevorzugt ist dabei eine Ausbildung, bei der zunächst der Zuschnitt gekröpft ausgebildet wird, bevor wenigstens ein Durchbruch und ein Element ausgebildet werden. Durch diese Maßnahme wird eine höhere Toleranzsicherheit erreicht.

Nach einem noch weiteren erfinderischen Gedanken wird ein Kettenglied einer Energieführungskette umfassend zwei beabstandet zueinander angeordnete Laschen vorgeschlagen, wobei wenigstens eine der Laschen die Merkmale der Lasche nach einem der Ansprüche 1 bis 8 aufweist und/oder nach einem Verfahren nach wenigstens einem der Ansprüche 9 bis 16 hergestellt ist.

Die Laschen können durch wenigstens einen Quersteg miteinander verbunden sein. Bei der Verbindung kann es sich um eine Schraubverbindung handeln. Hierzu weisen die Laschen entsprechende Öffnungen auf, durch die Schrauben hindurchgeführt werden können. Es besteht auch die Möglichkeit, dass der Quersteg mit den Laschen durch eine formschlüssige Verbindung verbunden ist.

Nach einem noch weiteren erfinderischen Gedanken wird eine Energieführungskette umfassend eine Mehrzahl von gelenkig miteinander verbundenen Kettengliedern vorgeschlagen, wobei wenigstens ein Kettenglied nach Anspruch 17 ausgebildet ist. Besonders bevorzugt ist eine Ausgestaltung einer Energieführungskette, die eine halbstegige Anordnung aufweist. Dies bedeutet, dass bei einem jeden zweiten Kettenglied Querstege vorgesehen sind. Um eine axiale Sicherung gegen ein Lösen der Gelenkverbindung der Kettenglieder, die keine Querstege aufweisen zu erreichen, wird vorgeschlagen, dass wenigstens ein Sicherungselement vorgesehen ist, welches sich durch das Element und einen Durchbruch hindurcherstreckt. Bevorzugt ist dabei eine Ausgestaltung des Sicherungselementes, bei der dieses einen Kopf und einen Schaft aufweist, wobei mit dem Schaft wenigstens ein Hilfsmittel verbunden ist, so dass das Sicherungselement vorzugsweise lösbar mit den Laschen verbunden ist.

Nach einer noch weiteren vorteilhaften Ausgestaltung der Energieführungskette wird vorgeschlagen, dass das Element ein Innengewinde und das Sicherungselement ein Außengewinde aufweist. Das Innengewinde kann vorzugsweise während des Kragenziehens ausgebildet sein.

Bevorzugt ist eine Ausgestaltung der Energieführungskette, bei der die Lasche und insbesondere das Element so ausgebildet sind, dass das Innengewinde innerhalb des Elementes durch eine gewindefurchende oder selbstschneidende Schraube während der Montage erzeugt wird.

Nach einer noch weiteren vorteilhaften Ausgestaltung der erfindungsgemäßen Energieführungskette wird vorgeschlagen, dass das Sicherungselement formund/oder kraftschlüssig mit dem Element verbunden ist. Hierbei kann es sich beispielsweise um eine bajonettartige Verbindung zwischen dem Sicherungselement und dem Element handeln.

Besonders bevorzugt ist eine Ausgestaltung der erfindungsgemäßen Energieführungskette, bei der das Sicherungselement so mit dem Element verbunden ist, dass durch das Sicherungselement das Element verstärkt wird, wodurch höhere Biegemomente und Zugkräfte zwischen den Laschen benachbarter Kettenglieder übertragen werden können. Das Sicherungselement muss hierbei nicht zwingend sich durch das Element hindurch erstrecken. Es besteht die Möglichkeit, dass höhere Biegemomente und Zugkräfte lediglich dadurch übertragen werden, dass das Sicherungselement in das Element reinragt. Bevorzugt ist dabei besonders eine Ausgestaltung, bei der die Länge des Sicherungselementes so bemessen ist, dass dieses nicht aus der Lasche vorsteht. Bei einer solchen Ausbildung des Sicherungselementes, hat dieses eine Sicherheitsfunktion hinsichtlich der Übertragung höherer Biegemomente und Zugkräfte. Steht das Element entsprechend vor und wird es mit einem Hilfsmittel versehen, so bildet das Sicherungselement zusätzlich eine Sicherheit gegen axiale Verschiebung der Laschen.

Weitere Einzelheiten und Vorteile der Erfindung werden anhand der in der Zeichnung dargestellten Ausführungsbeispiele erläutert, ohne dass der Gegenstand der Erfindung auf diese konkrete Ausführungsform beschränkt wird. Es zeigen:
- Fig. 1: eine Lasche in einer Vorderansicht,
- Fig. 2: die Lasche im Schnitt entlang der Schnittlinie A-A,
- Fig. 3: die Lasche in einer perspektivischen Ansicht,
- Fig. 4: vergrößert und in einer Vorderansicht zwei miteinander verbundene Laschen
- Fig. 5: im Schnitt eine Gelenkverbindung zweier Laschen,
- Fig. 6: im Schnitt ein zweites Ausführungsbeispiel in Verbindung zweier Laschen und
- Fig. 7: ein drittes Ausführungsbeispiel im Schnitt einer Gelenkverbindung zweier Laschen.

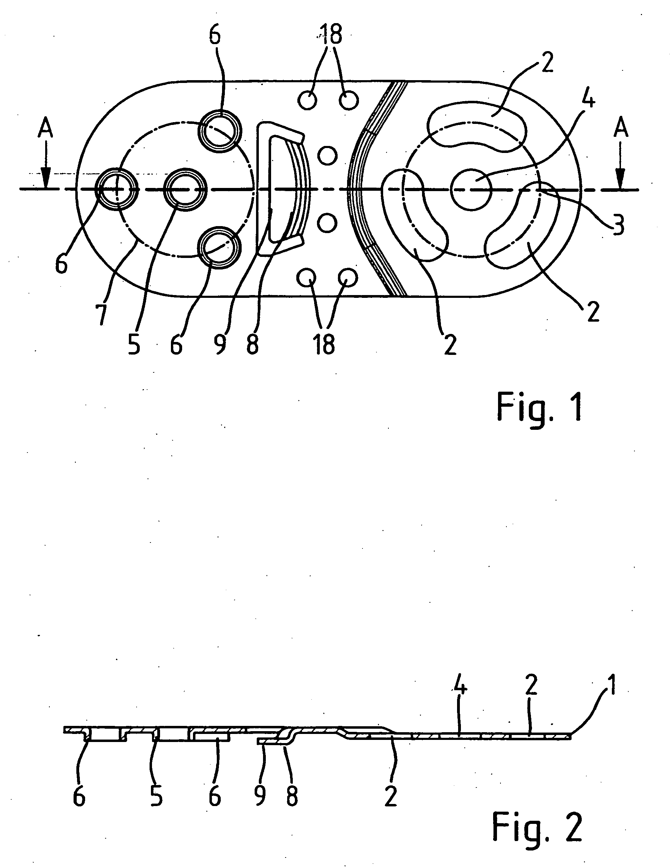

In der Fig. 1 ist eine Lasche für ein Kettenglied einer Energieführungskette in einer Vorderansicht dargestellt. Die Lasche 1 ist aus Metall. Sie weist einen ersten Endbereich und einen zweiten Endbereich auf. In dem dargestellten Ausführungsbeispiel weist der erste Endbereich drei Durchbrüche 2 auf. Die Durchbrüche 2 sind kreisbogenförmig ausgebildet. Sie liegen auf einem gemeinsamen gedachten Kreisumfang 3. Die Durchbrüche 2 umgeben einen im Wesentlichen kreisförmige ausgebildeten Durchbruch 4, der im Wesentlichen koaxial zu dem gedachten Kreis 3 ausgebildet ist.

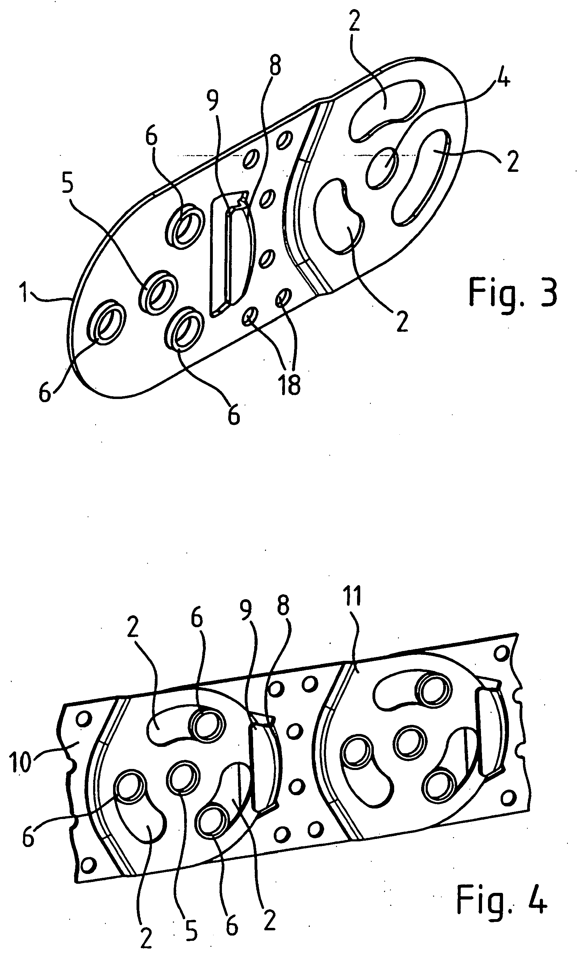

Am gegenüberliegenden Endbereich ist eine der Anzahl der Durchbrüche entsprechende Anzahl von Elementen 5, 6 ausgebildet, welche sich bei der Ausbildung einer Energieführungskette wenigstens teilweise in den jeweiligen Durchbruch einer anderen Lasche hineinerstrecken. Zentral ist ein Element 5 angeordnet, welches so beschaffen ist, dass dieses mit dem Durchbruch 4 eine Gelenkverbindung zwischen zwei benachbarten Laschen bildet. Die Elemente 6 sind auf einem gedachten Kreisumfang 7 angeordnet. Sind zwei Laschen miteinander verbunden, so greifen die Elemente 6 in die kreisbogenförmigen Durchbrüche 2 ein, wie dies aus der Fig. 4 ersichtlich ist.

Die Elemente 5, 6 sind durch ein Umformverfahren hergestellt. Sie stehen aus der Ebene der Lasche 1 vor, wie dies aus den Figuren 2 und 3 ersichtlich ist. Die Elemente 5, 6 sind durch Kragenziehen, vorzugsweise mit Vorlochen, ausgebildet. Sie weisen einen im Wesentlichen kreisförmigen Querschnitt auf. Die Höhe der Elemente 5, 6 entspricht vorzugsweise der Dicke der Lasche 1.

Zwischen dem ersten und dem zweiten Endbereich der Lasche sind Bohrungen 7 vorgesehen. Die Bohrungen 7 dienen zur Verbindung mit einem nicht dargestellten Quersteg.

Aus der Darstellung, insbesondere aus den Figuren 2 und 3, ist ersichtlich, dass die Lasche 1 gekröpft ausgebildet ist. Durch diese Ausbildung besteht die Möglichkeit eine Energieführungskette aus den gleichen Kettenlaschen aufzubauen. Benachbart zu den Elementen 5, 6 ist ein aus der Ebene der Lasche 1 vorstehender Vorsprung 8 vorgesehen. Der Vorsprung 8 weist einen im Wesentlichen parallel zur Lasche 1 ausgebildeten Abschnitt 9 auf. Der Abstand zwischen dem Abschnitt 9 und der Lasche 1 ist so gewählt, dass ein Endbereich einer Lasche in den Raum zwischen der Lasche und dem Abschnitt 9 einbringbar ist, wenn zwei Laschen miteinander verbunden werden.

Aus der Fig. 4 ist die Verbindung zweier Laschen 10, 11 ersichtlich. Die Elemente 6 der Lasche 11 greifen in die bogenförmigen Durchbrüche 2 der Lasche 10 ein. Das Element 5 greift in den kreisförmigen Durchbruch 4 der Lasche 10 ein. Hierdurch wird eine Gelenkverbindung zwischen den Laschen 10, 11 ausgebildet. Der Verschwenkwinkel wird durch die Länge der kreisbogenförmigen Durchbrüche 2 und den Außendurchmesser der Elemente 6 bestimmt.

Die Lasche 11 weist einen Vorsprung 8 auf, der einen Abschnitt 9 aufweist. Unterhalb des Abschnitts 9 ist ein Randbereich der Lasche 10 angeordnet, so dass zwischen der Lasche 10 und der Lasche 11 auch eine axiale Sicherung durch die Kombination des Vorsprungs 8 und des Randbereichs der Lasche 10 ausgebildet wird.

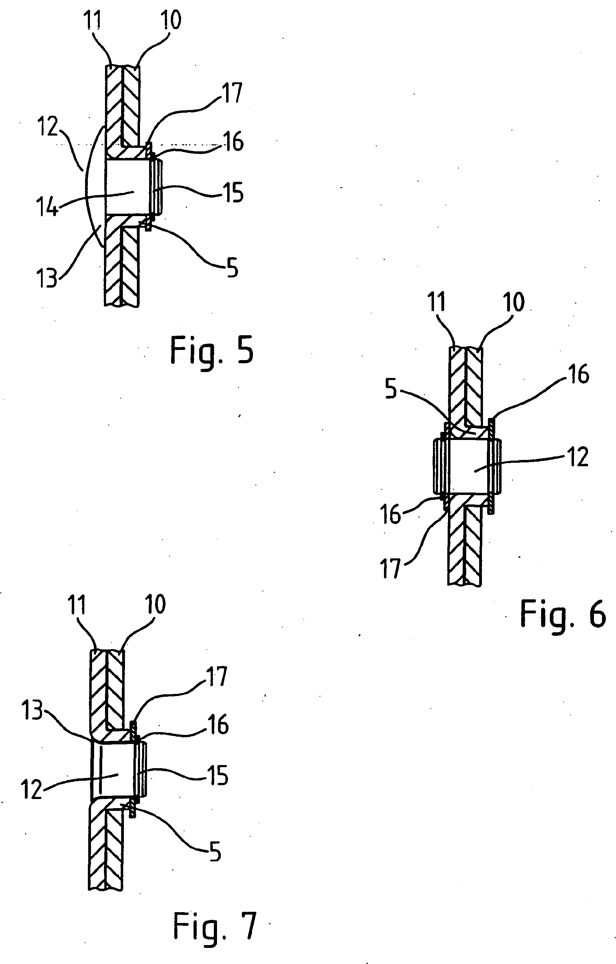

Zur Erhöhung der Sicherheit bei einer Energieführungskette, die aus den erfindungsgemäßen Laschen ausgebildet ist, wird die Verwerdung eines Sicherungselementes vorgeschlagen, wie dies aus der Fig. 5 ersichtlich ist. Fig. 5 zeigt eine Querschnittsansicht durch die Gelenkverbindung zwischen den miteinander verbundenen Laschen einer Energieführungskette.

Das Element 5 erstreckt sich durch den Durchbruch 4. In das Element 4 ist ein Sicherungselement 12 eingebracht. Es weist einen Kopf 13 auf, welcher zu Anlage an die Lasche 11 gebracht ist. An den Kopf 13 schließt sich ein im Wesentlichen kreisförmig ausgebildeter Schaft 14 an, der sich durch das Element 5 hindurch erstreckt. Benachbart zum freien Ende des Schaftes 14 ist eine Ringnut 15, in die ein Hilfsmittel 16 eingebracht ist. Bei dem Hilfsmittel 16 handelt es sich vorzugsweise um einen Sicherungsring. Zwischen dem Sicherungsring bzw. Hilfsmittel 16 und der Stirnfläche des Durchbruchs 5 ist eine Scheibe 17 angeordnet. Dies ist nicht zwingend notwendig. Die Sicherung kann auch ohne Scheibe 17 erreicht werden.

Die Anordnung des Sicherungselementes 12 ist vorzugsweise so gewählt, dass der Kopf 13 an der Innenseite der Laschen bzw. des Kettengliedes angeordnet wird.

In der Fig. 6 ist ein zweites Ausführungsbeispiel einer Gelenkverbindung zweier Laschen im Schnitt dargestellt.

Das Element 5 erstreckt sich hierbei durch den Durchbruch 4 einer benachbarten Lasche. In das Element 4 ist ein Sicherungselement 12 eingebracht. Das Sicherungselement 12 ist bolzenförmig ausgebildet. Es weist benachbart zu den Endbereichen des Sicherungselementes 12 jeweils eine vorzugsweise umlaufende Ringnut auf, in die Hilfsmittel 16 eingebracht sind. Die Hilfsmittel 16 dienen zur Sicherung. Das Sicherungselement 12 kann auch beispielsweise mittels einer Pressfassung in das Element 5 eingebracht sein. Bei einer solchen Ausgestaltung bildet das Sicherungselement 12 eine Verstärkung, wodurch höhere Biegemomente und Zugkräfte zwischen den Laschen übertragen werden können.

Fig. 7 zeigt eine noch weitere vorteilhafte Ausgestaltung einer Gelenkverbindung zwischen zwei Laschen. In dem in der Fig. 7 dargestellten Ausführungsbeispiel ist das Sicherungselement 12 so ausgestaltet, dass es lediglich einseitig aus dem Element 5 herausragt. Der Kopf des Sicherungselementes 12 ist so ausgebildet, dass er an die Kontur des Elementes 5 angepasst ist.

Durch die erfindungsgemäße Ausgestaltung der Lasche wird eine in der Herstellung kostengünstige Ausbildung einer Energieführungskette bereitgestellt. Die Laschen können ggf. auch mit einer Oberflächenbeschichtung versehen sein.

Statt eines in Form eines Bolzen ausgebildeten Sicherungselementes kann das Element 5 mit einem Innengewinde ausgebildet sein, so dass eine entsprechende Schraube einschraubbar ist, durch die eine axiale Sicherung der Laschen einer Energieführungskette erreicht werden kann.

### Bezugszeichenliste

- 1: Lasche
- 2: Durchbruch
- 3: Kreisumfang
- 4: Durchbruch
- 5: Element
- 6: Element
- 7: Bohrung
- 8: Vorsprung
- 9: Abschnitt
- 10, 11: Lasche
- 12: Sicherungselement
- 13: Kopf
- 14: Schaft
- 15: Ringnut
- 16: Hilfsmittel
- 17: Scheibe

## Patentansprüche

1. Lasche (1) aus einem Metall eines Kettengliedes einer Energieführungskette mit einem ersten Endbereich und einem zweiten Endbereich, wobei der erste Endbereich wenigstens zwei Durchbrüche (2, 4) aufweist, wobei der zweite Endbereich eine der Anzahl der Durchbrüche (2, 4) entsprechende Anzahl von Elementen (5, 6) aufweist, welche sich bei der Ausbildung einer Energieführungskette wenigstens teilweise in den jeweiligen Durchbruch (2, 4) einer anderen Lasche hineinerstrecken, wobei die Elemente (5, 6) durch ein Umformverfahren aus der Ebene der Lasche (1) vorstehen, **dadurch gekennzeichnet, dass** die Lasche (1) benachbart zu den Elementen (5, 6) wenigstens einen aus der Ebene der Lasche (1) vorstehenden Vorsprung (8) aufweist, der einen im wesentlichen parallel zur Lasche (1) ausgebildeten Abschnitt (9) hat.

2. Lasche nach Anspruch 1, **dadurch gekennzeichnet, dass** die Elemente (5, 6) durch ein Zugdruckumformverfahren ausgebildet werden.

3. Lasche nach Anspruch 2, **dadurch gekennzeichnet, dass** die Elemente (5, 6) durch Kragenziehen mit oder ohne Vorlochen ausgebildet sind.

4. Lasche nach Anspruch 1, 2 oder 3, **dadurch gekennzeichnet, dass** wenigstens ein Durchbruch (2) kreisbogenförmig ausgebildet ist.

5. Lasche nach Anspruch 4, **dadurch gekennzeichnet, dass** ein Durchbruch (4) im wesentlichen kreisförmig ist, wobei der wenigstens eine kreisbogenförmige Durchbruch (2) im wesentlichen koaxial zum kreisförmigen Durchbruch (4) ist.

6. Lasche nach wenigstens einem der vorhergehenden Ansprüche 1 bis 5, **dadurch gekennzeichnet, dass** die Lasche (1) gekröpft ausgebildet ist.

7. Lasche nach Anspruch 6, **dadurch gekennzeichnet, dass** der Vorsprung (8) durch ein Umformverfahren ausgebildet ist.

8. Lasche nach wenigstens einem der vorhergehenden Ansprüche 1 bis 7, **dadurch gekennzeichnet, dass** ein Durchbruch (4) und ein Element (5) jeweils einen Teil eines Gelenks zur gelenkigen Verbindung zweier Laschen bilden.

9. Verfahren zur Herstellung einer Lasche aus Metall eines Kettengliedes einer Energieführungskette mit folgenden Schritten:
a) Bereitstellen eines Zuschnittes einer Lasche,
b) Ausbilden wenigstens zweier Durchbrüche (2, 4) an einem Endbereich,
c) Ausbilden einer der Anzahl der Durchbrüche (2, 4) entsprechenden Anzahl von Elementen (5, 6) durch ein Umformverfahren, so dass die Elemente (5, 6) aus der Ebene der Lasche (1) vorstehen und Ausbilden wenigstens eines aus der Ebene der Lasche (1) vorstehender Vorsprung (8) benachbart zu den Elementen (5, 6) mit einem im Wesentlichen parallel zur Lasche (1) verlaufenden Abschnitt (9).

10. Verfahren nach Anspruch 9, bei dem die Elemente (5, 6) durch ein Zugdruckumformverfahren ausgebildet werden.

11. Verfahren nach Anspruch 10, **dadurch gekennzeichnet, dass** die Elemente (5, 6) durch Kragenziehen mit oder ohne Vorlochen ausgebildet werden.

12. Verfahren nach Anspruch 9, 10 oder 11, bei dem wenigstens ein Durchbruch (2) kreisbogenförmig ausgebildet, insbesondere ausgestanzt, wird.

13. Verfahren nach Anspruch 12, bei dem ein Durchbruch (4) im Wesentlichen kreisförmig ausgebildet, insbesondere ausgestanzt, wird.

14. Verfahren nach Anspruch 13, bei dem der Vorsprung (8) durch ein Umformverfahren, insbesondere Tiefziehen ausgebildet wird.

15. Verfahren nach einem der Ansprüche 9 bis 14, bei dem die Lasche (1) durch ein Umformverfahren gekröpft ausgebildet wird.

16. Verfahren nach Anspruch 15, bei dem zunächst der Zuschnitt gekröpft ausgebildet wird.

17. Kettenglied einer Energieführungskette umfassend zwei beabstandet zueinander angeordnete Laschen (1), wobei wenigstens eine der Laschen die Merkmale der Lasche nach einem der Ansprüche 1 bis 8 aufweist und/oder nach einem Verfahren nach wenigstens einem der Ansprüche 9 bis 16 hergestellt ist.

18. Energieführungskette umfassend eine Mehrzahl von gelenkig miteinander verbundenen Kettengliedern, wobei wenigstens ein Kettenglied nach Anspruch 17 ausgebildet ist.

19. Energieführungskette nach Anspruch 18, **dadurch gekennzeichnet, dass** ein Sicherungselement (12) vorgesehen ist, welches sich durch das Element (5) hindurcherstreckt.

20. Energieführungskette nach Anspruch 19, **dadurch gekennzeichnet, dass** das Sicherungselement (12) einen Kopf (13) und einen Schaft (14) aufweist, wobei mit dem Schaft (14) wenigstens ein Hilfsmittel (16) verbunden ist.

21. Energieführungskette nach Anspruch 19, **dadurch gekennzeichnet, dass** das Element (5, 6) ein Innengewinde und das Sicherungselement ein Außengewinde aufweist.

22. Energieführungskette nach Anspruch 19, **dadurch gekennzeichnet, dass** das Sicherungselement form- und/oder kraftschlüssig mit dem Element verbunden ist.

## Claims

1. Sideplate (1), made from a metal, of a chain link of a power transmission chain, having a first end region and a second end region, the first end region having at least two through-holes (2, 4), the second end region having a number of elements (5, 6) which corresponds to the number of through-holes (2, 4), which elements at least partially extend during the construction of a power transmission chain into the respective through-hole (2, 4) of another sideplate, the elements (5, 6) protruding from the plane of the sideplate (1) owing to a forming method, **characterized in that** next to the elements (5, 6) said sideplate (1) has at least one projection (8) which protrudes from the plane of the sideplate (1) and has a section (9) constructed in a fashion substantially parallel to the sideplate (1).

2. Sideplate according to Claim 1, **characterized in that** the elements (5, 6) are constructed by means of a tensile compressive forming method.

3. Sideplate according to Claim 2, **characterized in that** the elements (5, 6) are constructed by means of plunging with or without prepunching.

4. Sideplate according to Claim 1, 2 or 3, **characterized in that** at least one through-hole (2) is constructed in the shape of a circular arc.

5. Sideplate according to Claim 4, **characterized in that** one through-hole (4) is substantially circular, the at least one through-hole (2) in the shape of a circular arc being substantially coaxial with the circular through-hole (4).

6. Sideplate according to at least one of the preceding Claims 1 to 5, **characterized in that** the sideplate (1) is of cranked construction.

7. Sideplate according to Claim 6, **characterized in that** the projection (8) is constructed by means of a forming method.

8. Sideplate according to at least one of the preceding Claims 1 to 7, **characterized in that** a through-hole (4) and an element (5) respectively form a part of an articulation for the articulated connection of two sideplates.

9. Method for producing a sideplate, made from metal, of a chain link of a power transmission chain, having the following steps:
a) providing a blank of a sideplate,
b) constructing at least two through-holes (2, 4) at an end region, and
c) constructing a number, corresponding to the number of the through-holes (2, 4), of elements (5, 6) by means of a forming method such that the elements (5, 6) protrude from the plane of the sideplate (1), and constructing next to the elements (5, 6) at least one projection (8) which protrudes from the plane of the sideplate (1) and has a section (9) running substantially parallel to the sideplate (1).

10. Method according to Claim 9, in which the elements (5, 6) are constructed by means of a tensile compressive forming method.

11. Method according to Claim 10, **characterized in that** the elements (5, 6) are constructed by means of plunging with or without prepunching.

12. Method according to Claim 9, 10, or 11, in which at least one through-hole (2) is constructed in the shape of a circular arc, in particular is punched out.

13. Method according to Claim 12, in which one through-hole (4) is constructed substantially in the shape of a circle, in particular is punched out.

14. Method according to Claim 13, in which the projection (8) is constructed by means of a forming method, in particular deep drawing.

15. Method according to one of Claims 9 to 14, in which the sideplate (1) is constructed in a cranked fashion by means of a forming method.

16. Method according to Claim 15, in which the blank is firstly constructed in a cranked fashion.

17. Chain link of a power transmission chain, comprising two sideplates (1) arranged spaced apart from one another, in which at least one of the sideplates has the features of the sideplate according to one of Claims 1 to 8, and/or is produced in accordance with a method according to at least one of Claims 9 to 16.

18. Power transmission chain comprising a plurality of chain links interconnected in an articulated fashion, in which at least one chain link is constructed in accordance with Claim 17.

19. Power transmission chain according to Claim 18, **characterized in that** a securing element (12) is provided which extends through the element (5).

20. Power transmission chain according to Claim 19, **characterized in that** the securing element (12) has a head (13) and a shank (14), at least one aid (16) being connected to the shank (14).

21. Power transmission chain according to Claim 19, **characterized in that** the element (5, 6) has an internal thread, and the securing element has an external thread.

22. Power transmission chain according to Claim 19, **characterized in that** the securing element is connected to the element in a self-closed and/or force-closed fashion.

## Revendications

1. Eclisse (1) en métal d'un maillon d'une chaîne d'alimentation comportant une première région d'extrémité et une deuxième région d'extrémité, dans laquelle la première région d'extrémité présente au moins deux passages (2, 4), dans laquelle la deuxième région d'extrémité présente un nombre d'éléments (5, 6) correspondant au nombre des passages (2, 4), qui s'étendent au moins en partie dans le passage respectif (2, 4) d'une autre éclisse lors de la formation d'une chaîne d'alimentation, dans laquelle les éléments (5, 6) sont saillants hors du plan de l'éclisse (1) par un procédé de déformation, **caractérisée en ce que** l'éclisse (1) présente, à proximité des éléments (5, 6), au moins une protubérance (8) saillante hors du plan de l'éclisse (1), qui comprend une partie (9) formée essentiellement parallèlement à l'éclisse (1).

2. Eclisse selon la revendication 1, **caractérisée en ce que** les éléments (5, 6) sont formés par un procédé de déformation plastique par traction et compression.

3. Eclisse selon la revendication 2, **caractérisée en ce que** les éléments (5, 6) sont formés par emboutissage de collerettes avec ou sans perforation préalable.

4. Eclisse selon la revendication 1, 2 ou 3, **caractérisée en ce qu'**au moins un passage (2) est réalisé en forme d'arc de cercle.

5. Eclisse selon la revendication 4, **caractérisée en ce qu'**un passage (4) est essentiellement circulaire, dans laquelle ledit au moins un passage en forme d'arc de cercle (2) est essentiellement coaxial au passage circulaire (4).

6. Eclisse selon au moins une des revendications 1 à 5, **caractérisée en ce que** l'éclisse (1) est coudée.

7. Eclisse selon la revendication 6, **caractérisée en ce que** la protubérance (8) est formée par un procédé de déformation.

8. Eclisse selon au moins une des revendications 1 à 7, **caractérisée en ce qu'**un passage (4) et un élément (5) forment chaque fois une partie d'une articulation pour la liaison articulée de deux éclisses.

9. Procédé de fabrication d'une éclisse en métal d'un maillon d'une chaîne d'alimentation, comprenant les étapes suivantes:
a) préparation d'une ébauche d'une éclisse;
b) formation d'au moins deux passages (2, 4) dans une région d'extrémité;
c) formation d'un nombre d'éléments (5, 6) correspondant au nombre de passages (2, 4), par un procédé de déformation, de telle manière que les éléments (5, 6) soient saillants hors du plan de l'éclisse (1) et formation d'au moins une protubérance (8) saillante hors du plan de l'éclisse (1) à proximité des éléments (5, 6) avec une partie (9) s'étendant essentiellement parallèlement à l'éclisse (1).

10. Procédé selon la revendication 9, dans lequel on forme les éléments (5, 6) par un procédé de déformation plastique par traction et compression.

11. Procédé selon la revendication 10, dans lequel on forme les éléments (5, 6) par emboutissage de collerettes avec ou sans perforation préalable.

12. Procédé selon la revendication 9, 10 ou 11, dans lequel on forme, en particulier par estampage, au moins un passage (2) en forme d'arc de cercle.

13. Procédé selon la revendication 12, dans lequel on forme, en particulier par estampage, au moins un passage (4) de forme circulaire.

14. Procédé selon la revendication 13, dans lequel on forme la protubérance (8) par un procédé de déformation, en particulier par emboutissage profond.

15. Procédé selon l'une quelconque des revendications 9 à 14, dans lequel on forme l'éclisse (1) sous forme coudée par un procédé de déformation.

16. Procédé selon la revendication 15, dans lequel on forme d'abord l'ébauche sous forme coudée.

17. Maillon d'une chaîne d'alimentation comprenant deux éclisses (1) disposées à distance l'une de l'autre, dans laquelle au moins une des éclisses présente les caractéristiques de l'éclisse selon l'une quelconque des revendications 1 à 8 et/ou est fabriquée par un procédé selon au moins une des revendications 9 à 16.

18. Chaîne d'alimentation comprenant une pluralité de maillons articulés les uns aux autres, dans laquelle au moins un maillon est formé selon la revendication 17.

19. Chaîne d'alimentation selon la revendication 18, **caractérisée en ce qu'**il est prévu un élément de fixation (12), qui s'étend à travers l'élément (5).

20. Chaîne d'alimentation selon la revendication 19, **caractérisée en ce que** l'élément de fixation (12) présente une tête (13) et une tige (14), dans laquelle au moins un accessoire (16) est relié à la tige (14).

21. Chaîne d'alimentation selon la revendication 19, **caractérisée en ce que** l'élément (5, 6) présente un filet intérieur et l'élément de fixation un filet extérieur.

22. Chaîne d'alimentation selon la revendication 19, **caractérisée en ce que** l'élément de fixation est assemblé à l'élément par complémentarité de forme et/ou de force.
